# EUROPEAN PATENT SPECIFICATION

(11) **EP 2 648 000 B1**
(45) Date of publication and mention of the grant of the patent: **19.01.2022**
(21) Application number: 11845245.7
(22) Date of filing: 29.11.2011
(51) Int. Cl.: G01N 35/10

(54) **AUTOMATIC ANALYSIS APPARATUS**
AUTOMATISCHES ANALYSEGERÄT
APPAREIL D'ANALYSE AUTOMATIQUE

(30) Priority: 01.12.2010 JP 2010267937
(43) Date of publication of application: 09.10.2013
(73) Proprietor: Hitachi High-Tech Corporation, Minato-ku Tokyo 105-6409 (JP)
(72) Inventor: KOISO Yuichi, Minato-ku Tokyo 105-6409 (JP); NAKAMURA Kazuhiro, Minato-ku Tokyo 105-6409 (JP)
(74) Representative: Strehl Schübel-Hopf & Partner
(86) International application number: PCT/JP2011/077459
(87) International publication number: WO 2012/073922

(56) References cited:
- WO-A1-00/58736
- JP-A- 8 313 535
- JP-A- 2000 171 470
- JP-A- 2009 180 605
- US-A- 5 171 530
- US-A1- 2008 251 490

## Description

### Technical Field

The present invention relates to automatic analysis apparatuses which make qualitative and quantitative analyses of biologic samples such as blood and urine and more particularly to improvement of an automatic analysis apparatus which uses a piercing type liquid container. An automatic analysis apparatus as described in the preamble portion of patent claim 1 has been known from US 2008/251490 A1.

### Background Art

Typically an automatic analysis apparatus which makes an analysis of biologic samples such as blood and urine on a plurality of items can be loaded with a plurality of reagent containers containing a first reagent and a third reagent to be mixed with a sample to induce reaction. In recent years, the number of analysis items has been dramatically increasing and in response to this, many kinds of reagents are becoming commercially available.

Against this background, several types of reagent containers which contain reagents have also become commercially available and in order to prevent condensation of a reagent due to its evaporation, there is an increasing tendency to use a piercing type reagent container which has a reagent container cap to prevent deterioration of the reagent.

An automatic analysis apparatus which uses a piercing type reagent container like this is described, for example, in JP 2002-162403 A1. Paying attention to the fact that a larger portion of the dispensing nozzle are in contact with the cap when a piercing type reagent container is used , Patent Literature 1 proposes to reduce nozzle cleaning liquid and cleaning time by adjustment of the dispensing nozzle cleaning area.

US 2008/251490 A1 discloses an automatic analysis apparatus comprising: a liquid container with a piercing type cap, which contains a liquid; a dispensing nozzle for penetrating the cap and sucking the liquid contained in the liquid container; a nozzle vertical movement mechanism for moving up and down the dispensing nozzle, and a control device for controlling the nozzle vertical movement mechanism which lowers moving velocity of the dispensing nozzle in a zone where a tip of the dispensing nozzle passes through the cap is provided.

### Summary of Invention

### Technical Problem

When a dispensing nozzle breaks into the pierced piecing cap of a reagent container for reagent dispensing, the reagent container piercing cap and the dispensing nozzle are brought into contact with each other and at that time, dispensing nozzle abnormal descent detection may occur due to the descent velocity of the dispensing nozzle, the material or shape of the cap and so on. Dispensing nozzle abnormal descent detection is a function which stops the descent of the dispensing nozzle if the tip of the dispensing nozzle collides with a foreign object such as the apparatus top cover, in order to prevent damage to the dispensing nozzle and injury to the operator.

In addition, it has been found that when the dispensing nozzle ascends from the reagent container, step-out of the dispensing nozzle ascent motor and top dead point abnormality may occur and an amount of reagent attached to the dispensing nozzle tip in excess of an allowable amount may splash at the moment the dispensing nozzle leaves the piercing cap. It is considered that this kind of problem arises not only in reagent containers but also a similar problem arises in sample containers which contain liquid samples.

An automatic analysis apparatus is designed with an estimated safety factor to prevent these problems; however, it is desirable to design it with higher safety in case of unexpected circumstances such as cap material deterioration and nozzle tip deformation.

Therefore, the present invention has an object to provide a highly reliable automatic analysis apparatus using a piercing type liquid container which reduces the influence on analysis performance of dispensing nozzle alarms, reagent splashing and the like even if unexpected circumstances such as cap material deterioration and nozzle tip deformation occur.

According to the present invention the above object is accomplished with an automatic analysis apparatus having the features of claim 1.

Dependent claims are directed on features of preferred embodiments of the invention.

The further features of the present invention to achieve the above object will appear from the following embodiment described below.

### Advantageous Effects of Invention

In an automatic analysis apparatus using a piercing type liquid container, even if unexpected circumstances such as cap material deterioration, nozzle tip deformation and so on occur, the velocity of the dispensing nozzle passing through the cap can be decreased, so that the influence on analysis performance of dispensing nozzle alarms in the sampling mechanism, reagent splashing and so on is reduced, making it possible to realize a highly reliable automatic analysis apparatus.

### Brief Description of Drawings

Fig. 1 is a general structural diagram of an automatic analysis apparatus to which the present invention is applied.
Fig. 2 is a structural diagram of a reagent sampling mechanism according to a working example of the present invention.
Fig. 3 is a diagram illustrating the range of movement of a reagent sampling mechanism according to a working example of the present invention.
Fig. 4 is a diagram illustrating the control positional relation of a dispensing nozzle according to a working example of the present invention.
Fig. 5 is a flow chart of control position measurement of a dispensing nozzle according to a working example of the present invention.
Fig. 6 is a control position data map of a dispensing nozzle according to a working example of the present invention.

### Description of Embodiments

Next, an embodiment of the present invention will be described in detail using an illustrated working example. In the working example described below, as a piercing type liquid container to contain a liquid, an example of a reagent container to contain a reagent will be given, but not only a container to contain a reagent but also a piercing type sample container to contain a sample may be embodied similarly.

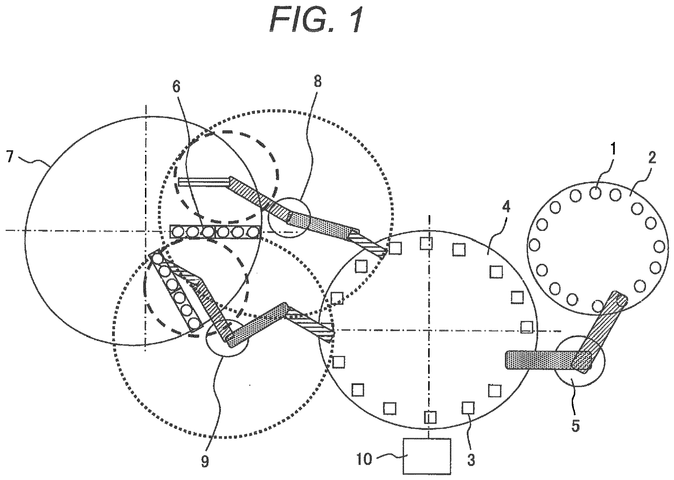

Fig. 1 is a general structural diagram which shows an example of an automatic analysis apparatus to which the present invention is applied.

This working example includes a sample disk 2 on which a sample container 1 containing a sample to be analyzed is loaded, a specimen sampling mechanism 5 for sucking the sample from the sample disk 2 and dispensing the sample to a reaction disk 4 holding a plurality of reaction cells 3 for reaction and photometry, a piercing type reagent container 6 filled with a first, a second and a third reagent to be mixed with the sample for reaction, a reagent disk 7 for storing a plurality of reagent containers 6 and keeping them cool, an R1 reagent sampling mechanism 8 for the first reagent which dispenses the reagent from the reagent container 6 to the reaction disk 4, an R2/3 reagent sampling mechanism 9 for the third reagent, and a photometric section 10 for photometric measurement of a liquid mixture of the sample and reagent which react with each other on the reaction disk 4. The operation control of the tables and mechanisms is performed by a control device (not shown in the figure) which includes a computer and so on.

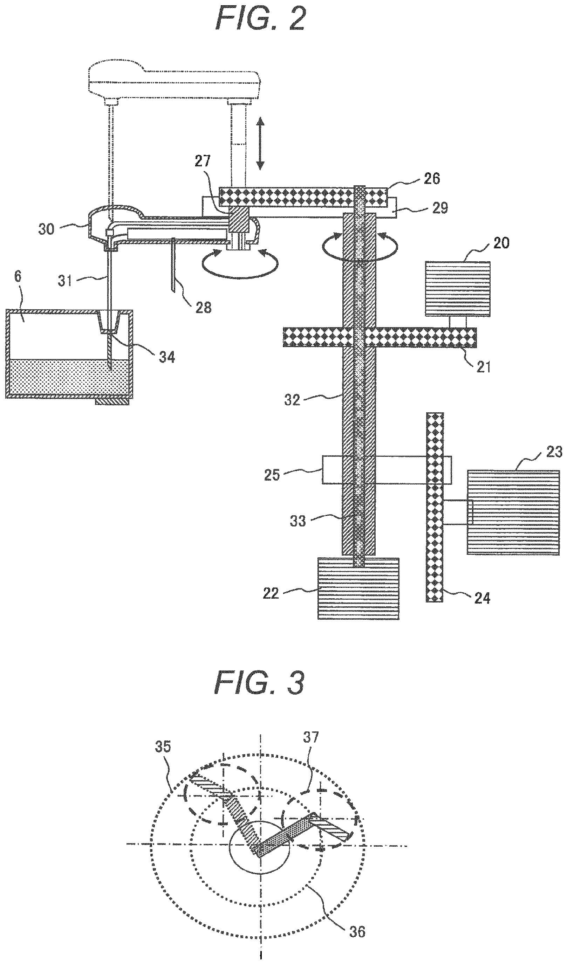

Fig. 2 is a structural diagram of a reagent sampling mechanism according to a working example of the present invention. A dispensing nozzle 31 provided in the reagent sampling mechanism 8, 9 is operated by a combination of horizontal and vertical movements.

A horizontal movement is made by a combination of the rotation of a first arm 29 and the rotation of a second arm 30. The first arm 29 is rotated by transmitting the rotary driving force of a first arm drive motor 20 through a belt 21 for the first arm to a first arm shaft 32 and the first arm 29.

The second arm 30 is done by transmitting the rotary driving force of a second arm drive motor 22 to a second arm shaft 33 and further transmitting it through a belt 26 for the second arm to a shaft 27 which is located in the first arm and serves as the center of rotation of the second arm.

Fig. 3 shows the range of movement of a reagent sampling mechanism and the range of access 35 of the reagent dispensing nozzle 31 is a wide range which combines the range of movement 36 of the first arm and the range of movement 37 of the second arm.

For vertical movement, the rotation of a vertical movement drive motor 23 is transmitted through a vertical movement belt 24 and a slider 25 to the first arm shaft 32 so that the first arm 29 and the second arm 30 move up and down simultaneously.

An opening through which the dispensing nozzle 31 passes through the reagent container piercing cap 34 when dispensing the reagent can be made in the piercing cap 34 of the piercing type reagent container 6 by an opening nozzle 28.

The reagent sampling mechanism 8, 9 has an abnormal descent detection mechanism which detects that the reagent dispensing nozzle 31 collides with a foreign object during its descent. If the tip of the dispensing nozzle 31 collides with a foreign object, this abnormal descent detection mechanism detects by a photo-coupler (photo-interrupter) or the like that it has moved to a position above a prescribed position.

As the abnormal descent detection mechanism is activated, the descending movement of the nozzle is stopped to prevent damage to the nozzle and injury to the operator. Also when abnormal descent detection is made, the nozzle height can be calculated from the pulse number using a pulse motor or the like for the drive motor 23.

If a DC motor is used as the drive motor 23, it can be calculated similarly by providing a pulse encoder in its drive shaft and counting generated pulses.

In addition, an ordinary liquid level sensor which detects, based on electrical conductivity or change in electrostatic capacitance, that the dispensing nozzle 31 comes into contact with the reagent liquid surface in the reagent container 6 is also provided.

The height of the piercing cap 34 of the reagent container 6 can be calculated from the height dimension of the surface of loading onto the reagent disk 7 and the height dimension of the piercing cap 34 and the amount of descent of the dispensing nozzle 31 until the tip of the dispensing nozzle 31 provided in the reagent sampling mechanism 8, 9 comes into contact with the piercing cap 34.

However, it is considered that the height of the piercing cap 34 of the reagent container 6 placed on the circumference of the reagent disk 7 and the height of the reagent liquid surface vary with individual reagent containers, depending on the dimensional accuracy and assembly error of individual components, strain due to the weight of the reagent container 6 and so on.

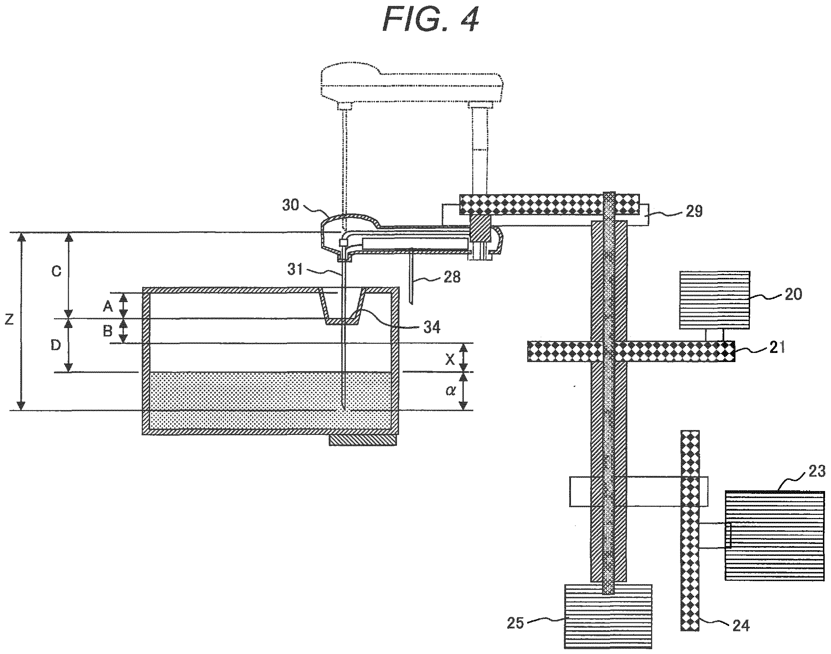

Fig. 4 shows the positional relation for control of the dispensing nozzle according this working example. In the figure, Z denotes the dimension of maximum movement of the dispensing nozzle, A and B denote low velocity zones, X denote the dimension of piercing cap-reagent liquid level dimension, α denotes the amount of immersion, C denotes the amount of descent to the reagent container piercing cap, and D denotes the dimension of piercing cap-reagent liquid level. In order to control the descent of the dispensing nozzle 31, it is necessary to find these positions and dimensions in relation to the amount of descent of the dispensing nozzle 31, though the positional relation varies with individual reagent containers for the abovementioned reasons.

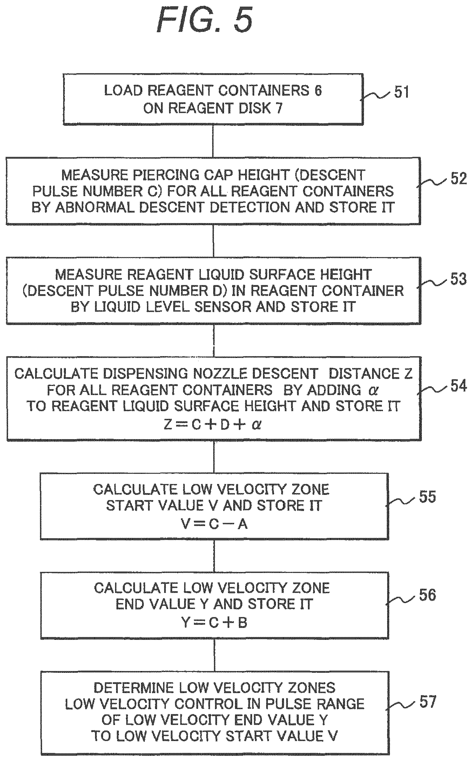

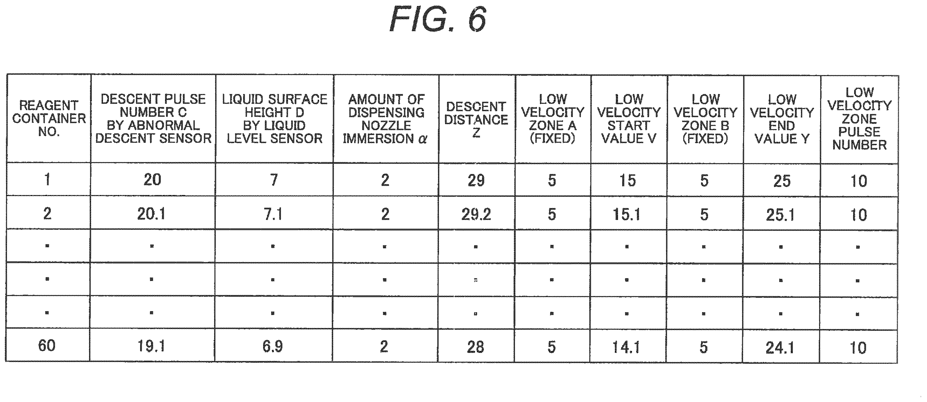

Therefore, first, a working example in which the positional relation among these is measured for each reagent container and stored will be described referring to the control position measurement flow of the dispensing nozzle in Fig. 5 and the control position data map in Fig. 6.

The automatic analysis apparatus is started up and before starting analysis, reagent containers are loaded on the reagent disk (Step 51), then, regarding the piercing cap height of the reagent containers placed on the circumference, the position where the sensor turns on for a reagent container (descent pulse number C) is measured for all the reagent containers by moving down the dispensing nozzle 31 and using abnormal descent detection and stored in the control position data map in Fig. 6 (Step 52).

Next, the dispensing nozzle 31 is moved down and regarding the height of the reagent liquid surface in the reagent container, the liquid level height (descent pulse number D) is measured using a liquid level sensor of the electrostatic capacitance type and stored in the control position data map in Fig. 6 (Step 53). The pulse number which is obtained by adding a fixed pulse number for the amount of immersion α to the pulse number D is the maximum descent pulse number Z, which is stored in the control position data map in Fig. 6 (Step 54).

In order to determine low velocity zones for the descent velocity of the dispensing nozzle in the vicinity of the piercing cap, low velocity start pulse number V is calculated by subtracting a fixed pulse number from the pulse number to reach the piercing cap and conversely low velocity end pulse number Y is calculated by adding a fixed pulse number to the pulse number to reach the piercing cap and they are stored in the control position data map in Fig. 6 (Steps 55, 56). The positional data on all the reagent containers (control pulse numbers) is calculated in this way to determine low velocity zones (Step 57) so that the subsequent vertical movements of the dispensing nozzle 31 are controlled according to the data stored in the control position data map in Fig. 6.

Here the amount of immersion α is the distance required for the tip of the dispensing nozzle 31 to get into the reagent liquid in order to ensure that the reagent is sucked in. Since the liquid level sensor generates a detection signal when the dispensing nozzle 31 comes into contact with the liquid, if a piercing type reagent container 6 is used, it also generates a detection signal upon contact of liquid attached to the piercing cap 34. In this case, the actual liquid surface is located below the piercing cap 34, so in the descending movement of the reagent sampling mechanism 8, 9, control is performed so as to ignore a detection signal during the descent down to the piercing cap 34.

In addition, by storing, for each reagent container, the remaining pulse number obtained by subtracting the number of pulses sent to the pulse motor until detection of the liquid surface, from the total number of pulses sent to the pulse motor to move the dispensing nozzle 31 down to the lowest descent point, when dispensing the same reagent next time, the descending movement of the dispensing nozzle 31 can be controlled at high velocity until the stored remaining pulse number.

When the reagent sampling mechanism 8, 9 is going to dispense the reagent, control is performed so that in the specific zones A and B before and after the dispensing nozzle 31 descends and passes through the piercing cap 34, the descent velocity of the dispensing nozzle 31 is temporarily lowered (velocity: 0.02 m/s) and after it passes over the zones, the descent velocity is set to a normal velocity (velocity: 0.04 m/s) . If the vertical movement drive motor 23 is a pulse motor, such high velocity movement and low velocity movement of the dispensing nozzle 31 can be achieved by changing its drive pulse rate according to the content of operation in the routine operation.

In the above example, by setting the velocity in the specific zones A and B to 50% of the normal velocity, priority is given to substantially reducing the frictional force generated when the dispensing nozzle 31 comes into contact with the piercing cap 34, but it has been found that if priority should be given to treatment efficiency, a sufficient effect is produced even by about 70% of the normal velocity.

As mentioned so far, when the dispensing nozzle 31 descends and passes through the piercing cap 34, the velocity is low in the low velocity zone A and after the piercing cap 34 is passed over, the low velocity is maintained in the low velocity zone B, and then it descends at the normal velocity for the distance X to the liquid surface (dimension X of low velocity zone-reagent liquid surface) . Therefore, the frictional force generated when the dispensing nozzle 31 comes into contact with the piercing cap 34 is decreased and false abnormal descent detection can be decreased and also the load on the reagent sampling mechanism 8, 9 is reduced.

Furthermore, when the dispensing nozzle 31 ascends from the liquid surface, similarly it ascends from the liquid surface at the normal velocity for the distance X before it comes into contact with the piercing cap 34, and passes through the piercing cap 34 while the low velocity is maintained for the distance B before it comes into contact with the piercing cap 34 and after passing over the distance A, the normal ascent velocity is restored.

Consequently, in the ascent of the dispensing nozzle 31 as well, the frictional force generated by contact of the dispensing nozzle 31 with the piercing cap 34 is decreased and step-out of the vertical movement drive motor 23 and false top dead point detection of the reagent sampling mechanism 8, 9 is reduced and also splashing of reagent liquid drops attached to the tip of the dispensing nozzle 31 outside the reagent container which occurs when the dispensing nozzle 31 comes into contact with the piercing cap 34 is also reduced.

Furthermore, the abovementioned working example has been described, taking a dispensing system for a reagent container to contain a reagent as an example; however, obviously not only a reagent container but even a piercing type sample container which contains a sample may be embodied similarly.

### List of Reference Signs

1... Sample container, 2... Sample disk, 3... Reaction cell, 4... Reaction disk, 5... Specimen sampling mechanism, 6... Reagent container, 7... Reagent disk, 8... R1 reagent sampling mechanism, 9... R2/3 reagent sampling mechanism, 10... Photometric section, 20... First arm drive motor, 21... First arm belt, 22... Second arm drive motor, 23... Vertical movement drive motor, 24... Vertical movement belt, 25... Slider, 26... Second arm belt, 27... Shaft, 28... Opening nozzle, 29... First arm, 30... Second arm, 31... Dispensing nozzle, 32... First arm shaft, 33... Second arm shaft, 34... Piercing cap, 35... Range of access of the reagent dispensing nozzle, 36... Range of movement of the first arm, 37... Range of movement of the second arm

## Claims

1. An automatic analysis apparatus comprising:
a liquid container (6) with a piercing type cap (34), which contains a liquid;
a dispensing nozzle (31) for penetrating the cap (34) and sucking the liquid contained in the liquid container (6); and
a nozzle vertical movement mechanism (8, 9) for moving up and down the dispensing nozzle (31), and
a control device for controlling the nozzle vertical movement mechanism (8, 9) which is configured to lower the moving velocity of the dispensing nozzle (31) in a zone where a tip of the dispensing nozzle (31) passes through the cap is provided,
**characterized in that**
the control device comprises a means for measuring height of a cap (34) of each of a plurality of liquid containers(6) set in place and a means for storing a low velocity zone start value and a low velocity zone end value calculated based on the cap height for each of the liquid containers (6); and
the control device is configured to lower the moving velocity during vertical movement of the dispensing nozzle (31) according to the start value and end value for the container (6) concerned.

2. The automatic analysis apparatus according to Claim 1, comprising a dispensing nozzle abnormal descent detection mechanism for detecting contact of the dispensing nozzle (31) with a foreign object, wherein the control device is configured to store a cap position detected by the dispensing nozzle abnormal descent detection mechanism and to determine, from the detected cap position, a zone in which the tip of the dispensing nozzle (31) passes through the cap.

3. The automatic analysis apparatus according to any one of Claims 1 to 2, wherein a velocity in a zone in which the tip of the dispensing nozzle (31) passes through the cap is 50% to 70% of a velocity other than in the zone in which the cap is passed through.

## Patentansprüche

1. Automatisches Analysegerät, umfassend:
einen Flüssigkeitsbehälter (6) mit einer durchstechbaren Kappe (34), der eine Flüssigkeit enthält;
eine Dosierspitze (31) zum Durchstechen der Kappe (34) und zum Ansaugen der in dem Flüssigkeitsbehälter (6) enthaltenen Flüssigkeit; und
einen Mechanismus (8, 9) zur vertikalen Bewegung der Spitze, um die Dosierspitze (31) auf und ab zu bewegen, und
eine Steuervorrichtung zum Steuern des vertikalen Mechanismus (8, 9) zur vertikalen Bewegung der Spitze vorgesehen ist, die so konfiguriert ist, dass sie die
Bewegungsgeschwindigkeit der Abgabedüse (31) in einem Bereich, in dem eine Spitze der Abgabedüse (31) die Kappe durchdringt, verringert,
**dadurch gekennzeichnet, dass**
die Steuervorrichtung ein Mittel zum Messen der Höhe einer Kappe (34) jedes Flüssigkeitsbehälters (6) aus einer Vielzahl von Flüssigkeitsbehältern (6), die an ihrem Platz aufgestellt sind, und ein Mittel zum Speichern eines
Niedriggeschwindigkeitszonen-Startwertes und eines Niedriggeschwindigkeitszonen-Endwertes, die auf der Grundlage der Kappenhöhe für jeden der Flüssigkeitsbehälter (6) berechnet werden, umfasst; und
die Steuervorrichtung so konfiguriert ist, dass sie die Bewegungsgeschwindigkeit während der vertikalen Bewegung der Dosierspitze (31) entsprechend dem Startwert und dem Endwert für den betreffenden Behälter (6) verringert.

2. Automatisches Analysegerät nach Anspruch 1, umfassend einen Mechanismus zur Erkennung eines abnormalen Absinkens der Dosierspitze, um einen Kontakt der Dosierspitze (31) mit einem Fremdkörper zu erkennen, wobei die Steuervorrichtung so konfiguriert ist, dass sie eine von dem Mechanismus zur Erkennung eines abnormalen Absinkens der Dosierspitze erkannte Kappenposition speichert und aus der erkannten Kappenposition eine Zone bestimmt, in der die Spitze der Dosierspitze (31) die Kappe durchdringt.

3. Automatische Analysevorrichtung nach einem der Ansprüche 1 bis 2, wobei die Geschwindigkeit in einem Bereich, in dem die Spitze der Dosierspitze (31) die Kappe durchquert, 50 % bis 70 % einer Geschwindigkeit in einem anderen Bereich als in dem Bereich beträgt, in dem die Kappe durchquert wird.

## Revendications

1. Appareil d'analyse automatique comprenant :
un récipient (6) pour liquide avec un bouchon (34) de type à percer, qui contient un liquide ;
une buse (31) de distribution pour pénétrer le bouchon (34) et aspirer le liquide contenu dans le récipient (6) pour liquide ; et
un mécanisme (8, 9) de mouvement vertical de buse pour déplacer vers le haut et vers le bas la buse (31) de distribution, et
un dispositif de commande pour commander le mécanisme (8, 9) de mouvement vertical de buse qui est configuré pour abaisser la vitesse de mouvement de la buse (31) de distribution dans une zone où une pointe de la buse (31) de distribution passe à travers le bouchon est prévu,
**caractérisé en ce que**
le dispositif de commande comprend un moyen pour mesurer une hauteur d'un bouchon (34) de chacun d'une pluralité de récipients (6) pour liquide mis en place et
un moyen pour stocker une valeur de début de zone basse vitesse et une valeur de fin de zone basse vitesse calculées sur la base de la hauteur de bouchon pour chacun des récipients (6) pour liquide ; et
le dispositif de commande est configuré pour abaisser la vitesse de mouvement lors d'un mouvement vertical de la buse (31) de distribution en fonction de la valeur de début et de la valeur de fin pour le récipient (6) concerné.

2. Appareil d'analyse automatique selon la revendication 1, comprenant un mécanisme de détection de descente anormale de buse de distribution pour détecter un contact de la buse (31) de distribution avec un objet étranger, dans lequel le dispositif de commande est configuré pour stocker une position de bouchon détectée par le mécanisme de détection de descente anormale de buse de distribution et pour déterminer, à partir de la position de bouchon détectée, une zone dans laquelle la pointe de la buse (31) de distribution passe à travers le bouchon.

3. Appareil d'analyse automatique selon l'une quelconque des revendications 1 à 2, dans lequel une vitesse dans une zone dans laquelle la pointe de la buse (31) de distribution passe à travers le bouchon est 50% à 70% d'une vitesse ailleurs que dans la zone dans laquelle le bouchon est traversé.
